# EUROPÄISCHE PATENTSCHRIFT

(11) **EP 2 772 129 B1**
(45) Veröffentlichungstag und Bekanntmachung des Hinweises auf die Patenterteilung: **26.07.2017**
(21) Anmeldenummer: 14155365.1
(22) Anmeldetag: 17.02.2014
(51) Int. Cl.: A01D 34/535, A01G 23/093

(54) **Schlegelmesser sowie Messerwelle hierfür**
Flail knife and cutter block for the same
Fléau et porte-outils correspondant

(30) Priorität: 28.02.2013 DE 102013101968
(43) Veröffentlichungstag der Anmeldung: 03.09.2014
(73) Patentinhaber: MULAG Fahrzeugwerk Heinz Wössner GmbH & Co. KG, 77728 Oppenau (DE)
(72) Erfinder: Nalesini, Stefano, 77728 Oppenau (DE)
(74) Vertreter: Weickmann & Weickmann PartmbB

(56) Entgegenhaltungen:
- EP-A1- 0 182 122
- WO-A1-01/93659
- DE-C1- 19 951 086
- DE-U- 7 504 816
- DE-U1- 8 502 956
- FR-A2- 2 264 473
- US-A- 3 261 151
- US-A- 5 003 759
- US-A- 5 485 718
- US-A1- 2008 060 333

## Beschreibung

### I. Anwendungsgebiet

Die Erfindung betrifft ein Schlegelmesser, wie es in rotierenden Messerwellen verwendet wird, um zum Beispiel unerwünschten Bewuchs durch Überfahren mit der Messerwelle zu entfernen, sei es Gras oder Gestrüpp.

### II. Technischer Hintergrund

Dabei rotiert die Messerwelle um eine in der Regel etwa horizontale, quer zur Fahrtrichtung des Mähgerätes rotierende Achse, und nahe des Außenumfanges der Messerwelle ist auf jeweils einem parallel zur Rotationsachse liegenden Lagerbolzen jeweils ein Schlegelmesser montiert, dessen Schneidkante ebenfalls etwa parallel zur Rotationsachse liegt und betrachtet in Richtung der Rotationsachse meist eine S-Form oder eine Bogen-Form besitzt, an deren äußerem freien Ende eine Schneidkante angeordnet ist.

Jedes der Schlegelmesser ist um seinen Lagerbolzen begrenzt verschwenkbar, um beim Anlaufen gegen einen zu starken Widerstand, beispielsweise ein Holzteil, welches zu dick ist um von dem Schlegelmesser einfach durchschlagen zu werden, in Umfangsrichtung der Messerwelle nach hinten und innen ausweichen zu können und die Messerwelle nicht zu stark abzubremsen. Bei maximaler Auslenkung schlägt das Schlegelmesser dabei mit seiner Rückseite am Außenumfang der Messerwelle an.

Dabei treten eine Reihe von Problemen auf:

Ein Problem besteht darin, dass über die axiale Erstreckung der Messerwelle im Betrieb die Schlegelmesser ungleichmäßig abgenutzt werden, beispielsweise an einem axialen Ende eine schnellere Abnutzung der dortigen Schlegelmesser erfolgt, weil dieses Ende der Messerwelle häufig auf hartem Untergrund, beispielsweise dem Randbereich eines Straßenbelages, aufschlägt, neben dem der Bewuchs geschnitten werden soll.

Da eine Abnutzung bei den meisten bekannten Messerformen eine Verkürzung in radialer Richtung bedeutet, ergibt sich über die Länge der Messerwelle dadurch ein ungleichmäßiger wirksamer Durchmesser der Messerwelle und damit eine sich verändernde Schnitthöhe entlang der Messerwelle. Außerdem wird die Messerwelle dadurch zunehmend unwuchtig.

Ein weiteres Problem besteht darin, dass nach bereits relativ kurzem Verschleiß die Schneidkante so stark gerundet ist, dass die Schlegelmesser ausgebaut und nachgeschliffen werden müssen, was in der Regel jedoch nicht für alle Schlegelmesser in gleicher Weise notwendig ist und geschieht, so dass die nach dem Schleifen wieder eingebauten Schlegelmesser ebenfalls eine insgesamt nicht mehr ausgewuchtete Messerwelle ergeben.

Wegen der hohen Drehzahlen von circa **2000** Umdrehungen pro Minute bei einer Messerwelle zum Gras mähen und der hohen bewegten Massen muss eine solche Messerwelle, insbesondere nach dem Schärfen der Messer wieder ausgewuchtet werden, was einen hohen Arbeitsaufwand darstellt, um im Betrieb Schäden durch Vibrationen an der Aufhängung der Messerwelle und dem nachgeordneten Auslegerarm zu vermeiden.

Ein weiterer Nachteil besteht darin, dass die Schlegelmesser selbst und damit auch eine mit diesen spezifischen Schlegelmessern ausgestattete Messerwelle, primär für eine ganz bestimmte Aufgabe und für ein ganz bestimmtes Schneidgut ausgelegt ist, beispielsweise Gras in einem Fall oder Buschwerk mit dicken Ästen im anderen Fall. Gerade Mischbewuchs oder sich schnell ändernder Bewuchs stellt eine solche Messerwelle vor praktisch unlösbare Probleme.

Natürlich ist ein Umrüsten der Messerwelle auf eine andere Messerform möglich, der Arbeitsaufwand hierfür einschließlich des Auswuchtens ist jedoch ganz erheblich.

Hinsichtlich der Form des Schlegelmessers ist der nächstreichende Stand der Technik das Gebrauchsmuster DE 85 02 956 U1, welches in axialer Betrachtung ein ähnlich geformtes Schlegelmesser offenbart. Allerdings ist bei diesem Schlegelmesser das Lagerauge einstückig umlaufend geschlossen, und es besitzt keine Schneidkante, da der Zweck dieses Schlegelmessers explizit gerade darin besteht, das Material nicht zu zerschneiden, sondern zu zerschlagen.

Weiterhin ist aus der EP 0 182 122 A1 ein Schlegelmesser bekannt, welches ein aus zwei Teilen zusammengeschraubtes Lagerauge umfasst.

Hinsichtlich der Messerwelle ist als nächstreichender Stand der Technik die US 5 003 759 A zu betrachten, bei der über den Umfang verteilt Schlegelmesser angeordnet sind, die um ihre Lagerachsen um 360° durchschwingen können, und deren Flugkreis gegenüber dem Rest des Innenraumes der Messerwelle durch Bleche verschlossen ist. Auch bei dieser Messerwelle ist jedoch das Lagerauge der Schlegelmesser einstückig umlaufend ausgebildet.

DE 75 04 816 U und WO 01/93659 A1 zeigen dagegen Messerwellen, bei denen die dort über den Umfang verteilt angeordneten, schwenkbaren Schlegelmesser nicht um 360° durchschwenken können, sondern nur begrenzt bis zu einem Anschlag verschwenkbar sind, wodurch auch die Gefahr, dass abgeschnittenes Material ins Innere der Messerwelle gelangt, stark minimiert ist, da der Eingang in die Messerwelle durch das fest am Anschlag liegende Messer zum großen Teil verschlossen wird.

Bei beiden Schriften besitzen die eingesetzten Schlegelmesser umfänglich geschlossene, einstückige Lageraugen.

Die oben genannte EP 0 182 122 A1 mit dem zweiteiligen, verschraubten Lagerauge ist bezüglich der dort dargestellten Messerwelle so gestaltet, dass nach Lösen der Verschraubung das Schlegelmesser nicht in Richtung der offenen Seite der U-förmigen einen Lagerschale von der Lagerachse abgezogen werden kann, sondern dabei von der Messerwelle blockiert wird.

### III. Darstellung der Erfindung

### a) Technische Aufgabe

Es ist daher die Aufgabe gemäß der Erfindung, ein Schlegelmesser sowie eine damit ausgestattete Messerwelle zu schaffen, die eine zum auftretenden Verschleiß unterproportionale entstehende Unwucht aufweisen, seltener nachgeschliffen werden müssen und bei stark wechselndem Bewuchs eingesetzt werden können.

### b) Lösung der Aufgabe

Diese Aufgabe wird durch die Merkmale der Ansprüche **1** und **12** gelöst. Vorteilhafte Ausführungsformen ergeben sich aus den Unteransprüchen.

Die Grundidee besteht darin, einerseits ein Schlegelmesser für starken Bewuchs zu schaffen, welches ein offenes, verschraubbares Lagerauge besitzt, so dass die zugehörige Messerwelle großräumig am Außenumfang geschlossen verkleidet werden kann und dennoch ein Wechsel der Messer möglich ist.

Durch den geschlossenen Außenumfang wird ein Verhaken der Messerwelle mit dem Mähgut durch Eindringen in Hohlräume der Messerwelle vermieden, und die damit einhergehende Drehzahlreduzierung der Messerwelle. Viel mehr überrollt nun eine solche geschlossene Messerwelle das Mähgut und auch andere Hindernisse besser.

Andererseits soll trotz der dadurch bedingten großen Materialstärke des Lagerauges dennoch eine hohe Massenkonzentration möglichst weit radial außen erzielt werden und dabei der Schwerpunkt so angeordnet werden, dass bei eintretendem Verschleiß des Schlegelmessers nur eine unterproportionale Unwucht-Entwicklung der Messerwelle auftritt, indem dabei der Schwerpunkt des Schlegelmessers nur geringfügig radial nach innen wandert, und zusätzlich ein Selbstschärfungseffekt des Schlegelmessers erreicht werden.

Die hohe Massenkonzentration radial weit außen wird erreicht, indem der Messerkopf, an dem sich die nur in eine Richtung weisende Schneidkante befindet, dennoch eine große Erstreckung in Umfangsrichtung aufweist von mindestens **50°,** besser mindestens **60°,** besser mindestens **65°.**

Aus dem gleichen Grund steht der Messerkopf in beide axialen Richtungen über das Lagerauge vor, damit das Lagerauge so wenig Masse wie möglich enthält.

Der Messerkopf geht dabei im Wesentlichen ohne einen Schaft dazwischen direkt in das Lagerauge über, wobei die dünnste Stelle zwischen Messerkopf und Lagerauge vorzugsweise mindestens um den Faktor **1,1,** besser um den Faktor **1,2,** besser um den Faktor **1,3** breiter ist als der freie Durchmesser des Lagerauges. Dadurch wird eine sehr stabile Gestalt des Schlegelmessers erreicht, die auch bei hohem Widerstand nicht abbricht, und dennoch eine relativ hohe Massenkonzentration weit radial außen bewirkt.

Vorzugsweise ist ebenfalls zum Zweck der Massenkonzentration die längste Erstreckung des Messerkopfes in Umfangsrichtung von der Schneidkante aus gemessen mindestens **2,5**-fach, besser **2,8**-fach so groß wie die schmalste Stelle zwischen Messerkopf und Lagerauge.

Indem - axial betrachtet - die Verbindungslinie zwischen den beiden in Umfangsrichtung am weitesten vorstehenden Punkten des Messerkopfes die Tangente an den Flugkreis unter einem Winkel von höchstens **45°,** besser höchstens **40°,** besser höchstens **35°** schneidet, tritt bei Abnutzung ein teilweiser Selbstschärfungs-Effekt ein.

Der Messerkopf ist dabei so gestaltet, dass der Schwerpunkt des Schlegelmessers - axial betrachtet - etwa auf derjenigen radialen Linie durch die Schwenkachse liegt, die die Verbindungslinie zwischen den beiden in Umfangsrichtung am weitesten vorstehenden Punkten des Messerkopfes in deren Mitte schneidet.

Dadurch wird bei einem Verschleiß des Schlegelmessers der Schwerpunkt nur geringfügig in Radialrichtung verschoben.

Um bei einem Zurückschlagen des Schlegelmessers von einem starken Hindernis nicht mittels der großen Masse des Schlegelmessers die Messerwelle zu schädigen durch Anschlagen am Körper der Messerwelle, ist die Messerwelle so gestaltet, dass die Schlegelmesser in ihren Halterungen der Messerwelle um mehr als **360°** schwenken, also vollständig durchdrehen, können.

Dabei ist die Schneidkante, die ja nur in eine Umfangsrichtung weist, in ihrem mittleren Bereich ohne Absatz durchgehend ausgebildet, und insbesondere gerade und insbesondere parallel zur Schwenkachse des Schlegelmessers. Nahe der axial äußeren Enden weist die Schneidkante jedoch jeweils einen Absatz auf, so dass die radial zum Ende hin liegenden dadurch entstehenden Teil-Schneidkanten radial nach innen zurückversetzt sind und jeweils in axialer Richtung eine Länge von maximal **15** %, besser jeweils maximal **10** % der gesamten axialen Länge des Messerkopfes **3** betragen.

Der Zweck dieser radial nach innen versetzten äußeren Teil-Schneidkanten besteht darin, dass die Schlegelmesser einerseits bei einem Durchschwenken nach innen möglichst nahe an der Zentralwelle vorbei schwenken sollen, aber andererseits hierbei die Schweißnaht zwischen den Halteblechen und der Zentralwelle im Bewegungsweg des Schlegelmessers liegt. Anstatt dass gesamte Schlegelmesser radial weiter nach außen zu setzen, sind nur die äußersten Ecken des Schlegelmessers ausgenommen in Form der zurückversetzten Teil-Schneidkanten.

Die Teilschneidkanten sind vorzugsweise ebenfalls in ihrer Verlaufsrichtung gerade ausgerichtet.

Das in einer radialen Richtung offene Lagerauge ist in axialer Richtung betrachtet U- förmig, so dass auf die freien Enden dieser Kontur, die insbesondere zueinander fluchten und eben sind, eine einfache, ebene Lagerplatte aufgesetzt und verschraubt werden kann, um eine umfänglich geschlossene Lagerhülse zu schaffen. Dadurch kann nach Lösen dieser Verschraubungen das einseitig offene Lagerauge radial zur Seite von seinem Lagerbolzen abgezogen werden und der Lagerbolzen muss nicht axial herausgezogen werden.

Um das Auftreten einer Unwucht der rotierenden Messerwelle bei Verschleiß an diesen Schlegelmessern unterproportional zu halten, weisen die Schlegelmesser diese starke Massenkonzentration in einem weit radial außen liegenden Bereich, nämlich im Messerkopf auf, der alleine mindestens **70%** der Masse des gesamten Schlegelmessers besitzt. Der Schwerpunkt der Querschnittskontur - betrachtet in axialer Richtung - und/oder der reale Schwerpunkt des Schlegelmessers ist dabei nicht weiter als **70** %, besser nicht weiter als **65** % besser nicht weiter als **60** % des Flugkreisradius des Schlegelmessers von dessen Flugkreis radial nach innen versetzt.

Aus dem gleichen Grund ist die axiale Länge des Messerkopfes größer als die axiale Länge des Lagerauges, vorzugsweise um mindestens **15** % größer, insbesondere um mindestens **20** % größer.

Zusätzlich zu dieser Positionierung des Schwerpunktes ist gewünscht, dass die Schlegelmesser - wie oben bereits angesprochen - zumindest teilweise selbstschärfende Eigenschaften aufweisen, also die Abnutzung der Schneidkanten nicht nur zu einer Verrundung der Schneidkanten führt, sondern durch Abnutzung der an die Schneidkante angrenzenden Flanken ein Nachschärfeffekt auftritt.

Dies wird erreicht, indem zum einen der Schneidwinkel zwischen der Unterseite der Schneidkante und der Außenkontur des Messerkopfes in einem bestimmten Winkelbereich liegt, nämlich < **50°,** besser < **45°,** besser < **42°** und/oder > **30°,** besser > **35°,** besser > **38°.**

Ebenfalls aus diesem Grund ist - in axialer Richtung betrachtet - der Messerkopf mit einer Außenkontur gestaltet, die konvex gekrümmt ist, und deren Krümmungsradius höchstens **155**%, besser höchstens **150**%, besser höchstens **145**% des Flugkreisradius des Schlegelmessers beträgt.

Dadurch ist einerseits sichergestellt, dass die Schneidkante das radial am weitesten nach außen ragende Element des Schlegelmessers von dessen Schwenkachse aus ist, andererseits jedoch der Schwerpunkt dennoch sehr weit außen gehalten werden kann, und wegen des spezifischen Schneidwinkels und der sich daraus ergebenden Lage der Flanken zur Schneidkante bei einer Abnutzung sowohl die Unterseite als auch die Außenkontur der Schneidkante abgenutzt wird und dadurch ein Selbstschärfungseffekt eintritt.

Eine bestimmte Ausgestaltung der Messerwelle ist notwendig, um die Vorteile dieser spezifischen Bauform von Schlegelmessern ausnutzen zu können.

Dabei sollten die Aufnahmen für die Schlegelmesser so gestaltet sein, dass ein Durchschwenken der Schlegelmesser um **360°** oder auch mehr um ihre Aufhängung, das Lagerauge, möglich ist, damit die Messerwelle bei zurückschlagendem Schlegelmesser nicht beschädigt wird.

Gleichzeitig soll die Messerwelle natürlich dennoch einerseits einfach aufgebaut und andererseits stabil sein.

Zu diesem Zweck besteht die Messerwelle aus einer Zentralwelle, an deren axialen Enden die Lagerzapfen vorstehen, an denen die Messerwelle gelagert wird. Die Aufnahmen für die Schlegelmesser befinden sich radial im Abstand außerhalb der Zentralwelle:

Über den Umfang verteilt und parallel zur Rotationsachse, im Abstand radial außerhalb der Zentralwelle verlaufen Befestigungsstäbe. In Radialebenen der Messerwelle axial beabstandet, insbesondere gleichmäßig axial beabstandet, sind kreisscheibenförmige Haltebleche angeordnet, die sowohl von den Befestigungsstäben als auch der Zentralwelle durchdrungen werden. Zwischen je zwei Halteblechen ist jeweils ein Schlegelmesser angeordnet, wobei der Befestigungsstab als Lagerbolzen dient, der sich durch das Lagerauge des Schlegelmessers sowie eine beidseitige Distanzbuchse zwischen Lagerauge und den Halteblechen hindurcherstreckt, wobei in der Regel die Befestigungsstäbe nicht über die gesamte axiale Länge der Messerwelle durchgehen, sondern nur dort zwischen zwei Halteblechen vorhanden, insbesondere eingeschweißt, sind, wo ein Schlegelmesser befestigt werden soll.

Dabei befinden sich die Befestigungsstäbe nahe des äußeren Umfanges der Haltebleche und damit der Messerwelle, und der Abstand bis zum radial äußeren Ende ist deutlich geringer als die radiale Erstreckung eines Schlegelmessers. Gleichzeitig ist der radiale Abstand zwischen dem Lagerbolzen und der Zentralwelle groß genug, um ein Schlegelmesser dazwischen hindurch und somit um volle **360°** durchschwenken zu lassen.

Innerhalb einer Messerwelle sind alle Schlegelmesser in Umfangsrichtung mit gleicher Orientierung angeordnet, also beispielsweise mit der geraden, durchgehenden Schneidkante in Uhrzeigersinn weisend oder umgekehrt.

Zwischen den Halteblechen ist in den Bereichen, in denen keine Schlegelmesser angeordnet sind, eine äußere Verkleidung vorgesehen, um ein Verhaken der Messerwelle mit dem abzumähenden Bewuchs und damit eine Drehzahlreduzierung der Messerwelle zu verhindern.

Diese Verkleidung besteht vorzugsweise aus einem sich in Umfangsrichtung nahe der äußeren Ränder der Haltebleche zwischen zwei Halteblechen erstreckenden Blechstreifens, der sich über ca. **270°** des Umfanges erstreckt und von seinen Enden in Umfangsrichtung aus radial nach innen bis zur Zentralwelle erstreckt und an dieser anschließt. Auf diese Art und Weise wird nur das für das Rotieren um den Befestigungsstab freizulassende Segment zwischen zwei Halteblechen für ein Schlegelmesser freigehalten

### c) Ausführungsbeispiele

Ausführungsformen gemäß der Erfindung sind im Folgenden beispielhaft näher beschrieben. Es zeigen:

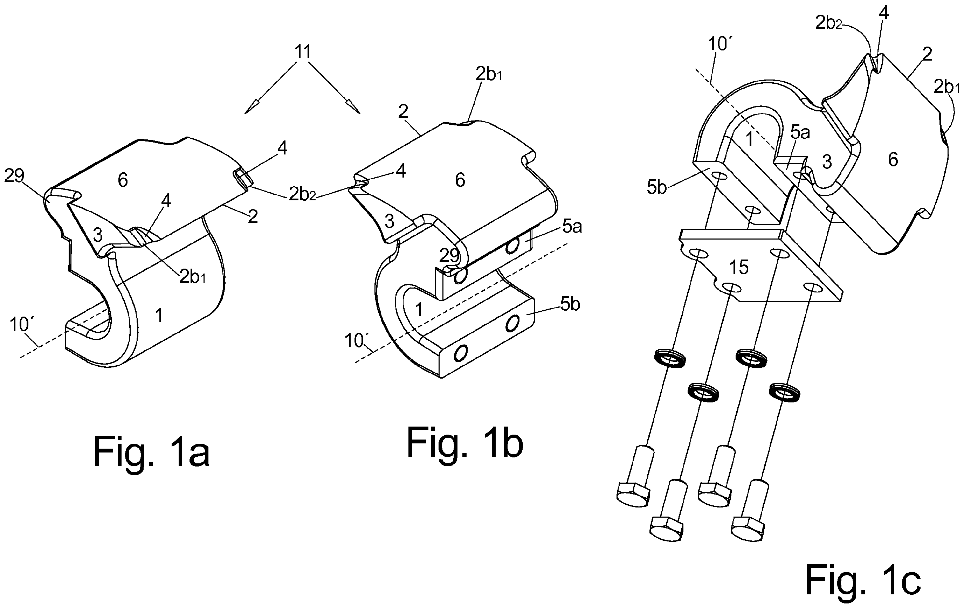

- Fig. **1**a**,** b:: das erfindungsgemäße Schlegelmesser in perspektivischer Darstellung,
- Fig. **1**c**:**: das Schlegelmesser mit zusätzlicher Lagerplatte,
- Fig. **2**a**,** b:: das Schlegelmesser in axialer Ansicht und Seitenansicht,
- Fig. **3:**: die Messerwelle in perspektivischer Darstellung,
- Fig. **4**a**:**: die Messerwelle in der Seitenansicht und

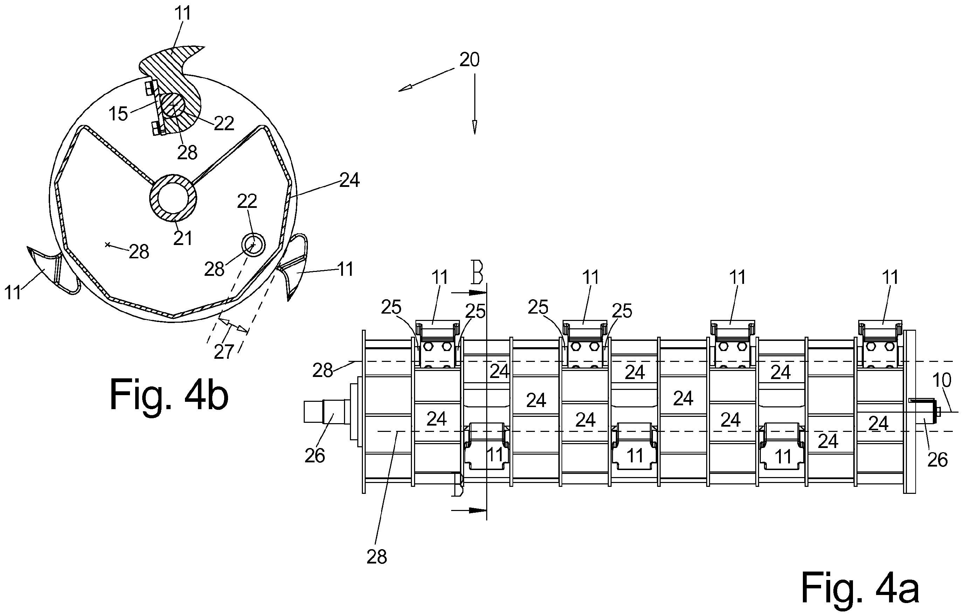

- Fig. **4**b**:**: einen Radialschnitt durch die Messerwelle.

Wie die **Figuren 1a, b** erkennen lassen, besitzt das Schlegelmesser in axialer Richtung **10'** betrachtet einen etwa gleichbleibenden Querschnitt, der aus einem radial zur einen Seite hin offenen Lagerauge **1** und einem sich daran radial anschließenden Messerkopf **3** besteht, an dem sich die in eine Umfangrichtung gerichtete Schneidkante **2** befindet.

Wie **Fig. 1c** zeigt, kann auf das U-förmige, einseitig offene Lagerauge **1,** dessen freie Enden **5a,** b jeweils eine ebene und zueinander fluchtende Fläche besitzen, eine ebene Lagerplatte **15** aufgelegt und verschraubt werden, wofür in die freien Enden **5a,** b des Lagerauges **1** hineinweisend Gewindebohrungen vorhanden sind.

Die Schenkel der U-Kontur des Lagerauges **1** sind dabei gerade so tief, dass im geschlossenen Zustand, also mit aufgeschraubter Lagerplatte **15,** ein runder Lagerbolzen darin Platz findet, der dann auch an der Lagerplatte **15** anliegt.

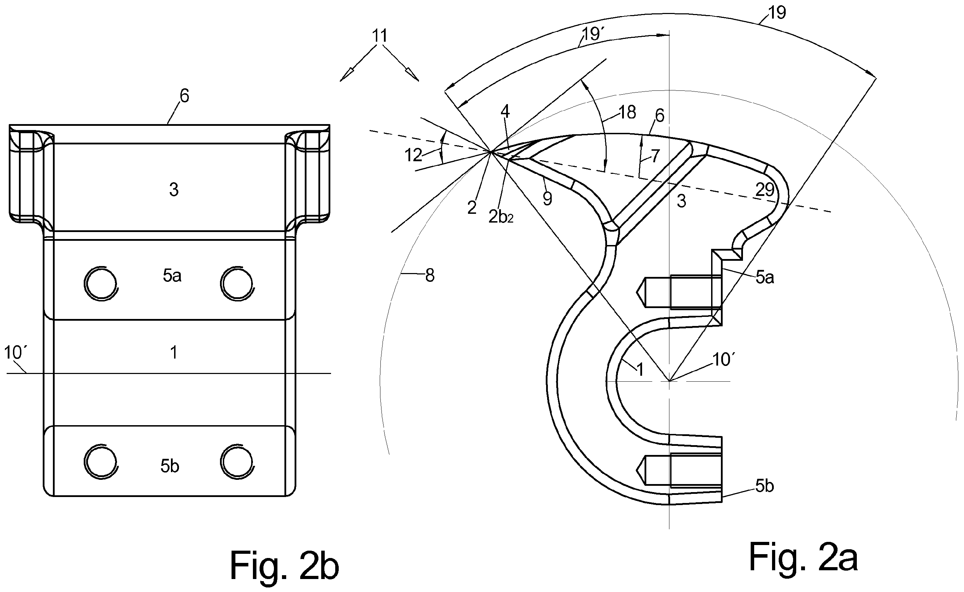

In der axialen Richtung **10'** betrachtet, wie in **Fig. 2a** dargestellt, ist erkennbar, dass das Schlegelmesser **11** vom Lagerauge **1** aus bogenförmig zur Schneidkante **2** nach außen verläuft, aber diese Bogenform auf der von der Schneidkante abgewandten Außenseite des Bogens einen Fortsatz, also eine Art Rucksack aufweist, um zusätzliche Masse in dem Messerkopf **3** zu konzentrieren, der dadurch eine nicht ganz symmetrische, aber fast pilzförmige Gestalt in dieser Blickrichtung besitzt.

Wie die **Figuren 1a** **und b** zeigen, ist der vordere Teil des Schneidkopfes **3,** der die Schneidkante **2** trägt, axial länger ausgebildet als der hintere Teil des Schneidkopfes **3,** der den Fortsatz **29** trägt, und auch länger als das Lagerauge **1.**

Die Schneidkante **2** verläuft gerade und parallel zur axialen Richtung **10',** aber nicht über die gesamte Länge des Messerkopfes **3** durchgehend, denn nahe der axialen Enden des Messerkopfes **3** weist die Schneidkante **2** jeweils einen Absatz **4** auf, so dass der bis zum freien Ende verbleibende Rest, die Teil-Schneidkanten **2**b**1, 2**b**2,** gegenüber dem mittleren größten Teil der Schneidkante **2** radial zurückversetzt ist.

Wie bei axialer Betrachtung in der **Fig. 2a** deutlich wird, besitzt die Schneidkante **2** im mittleren Bereich auch einen kleineren Schneidwinkel **12** zwischen der Unterseite **9** der Schneide und der Außenkontur als die radial nach hinten versetzten Teil-Schneidkanten **2**b**1, 2**b**2,** die sozusagen stumpfer sind.

Durch den Fortsatz **29** erstreckt sich der Messerkopf **3** in Umfangsrichtung über einen relativ großen Erstreckungswinkel **19** von fast **90°.**

Der Messerkopf **3** besitzt auf seiner radialen Außenseite eine Außenkontur **6,** die konvex gekrümmt ist mit einem Krümmungsradius **7,** der gleich oder geringfügig kleiner ist als der Krümmungsradius des Flugkreises **8.** Allerdings liegt der Krümmungsmittelpunkt dieser Außenkontur **6** nicht auf der Schwenkachse **10'** des Schlegelmessers, sondern von dort radial versetzt etwa im Boden der U-Kontur des Lagerauges **1.**

Dadurch steht die Verbindungslinie zwischen der Schneidkante **2** und dem davon am weitesten entfernten Punkt des Messerkopfes, also dem Ende des Fortsatzes **29,** unter einem Kopfwinkel **18** zur Tangente an dem Flugkreis **8** im Punkt der Schneidkante **2,** der circa **45°** beträgt.

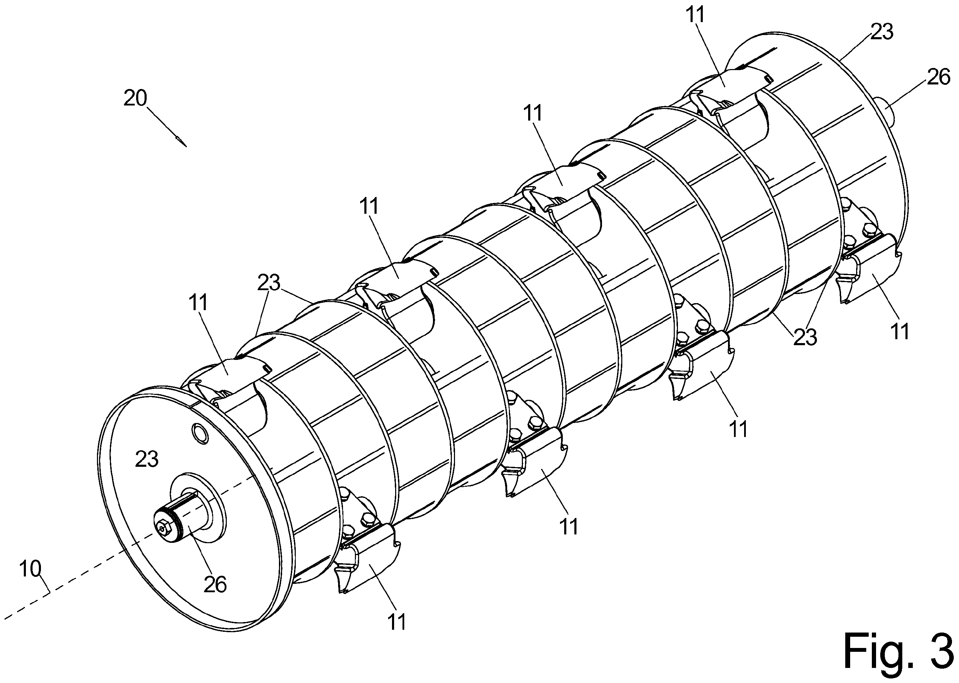

Die **Figuren 3ff** zeigen eine Messerwelle **20,** in der die vorstehend beschriebenen Schlegelmesser **11** eingesetzt werden können:

Die Messerwelle **20** besitzt eine Zentralwelle **21,** die entlang der Rotationsachse **10** der Messerwelle **20** verläuft, und deren freie Enden als Lagerzapfen **26** zum Lagern der Messerwelle **20** in einem umgebenden Gehäuse sowie zum drehenden Antreiben der Messerwelle **20** dienen.

Auf der Zentralwelle **21** sind axial in gleichmäßigem Abstand Haltebleche **23** angeordnet, die die Form einer Kreisscheibe oder eines Polygons besitzen, und durch deren Zentrum sich die Zentralwelle **21** erstreckt.

Radial außerhalb und beabstandet zur Zentralwelle **21** erstrecken sich ebenfalls in axialer Richtung **10** verlaufende Befestigungsstäbe **22,** in diesem Fall an drei Umfangspositionen über den Umfang der Messerwelle **20** verteilt mit einem Zwischenwinkel von jeweils **60°** dazwischen. Diese erstrecken sich jeweils durch ein solches axial benachbartes Paar von Halteblechen **23** nahe deren Außenumfang hindurch, zwischen dem ein Schlegelmesser angeordnet werden soll.

Die Befestigungsstäbe **22** dienen gleichzeitig als Lagerbolzen zum Aufnehmen je eines Lagerauges **1** eines Schlegelmessers **11:**

Auf jedem Befestigungsstab **22** ist ein Schlegelmesser **11** montiert, indem es mit dem seitlich offenen Lagerauge radial auf den Befestigungsstab **22** aufgesteckt und durch Aufschrauben der Lagerplatte **15** anschließend gesichert wird.

Zwischen zwei axial benachbarten Halteblechen **23** befindet sich nur an einer Umfangsposition ein Schlegelmesser **11,** so dass in axialer Richtung sich in jedem dritten Zwischenraum zwischen zwei Halteblechen **23** ein Schlegelmesser **11** befindet.

Zwischen zwei benachbarten Halteblechen **23** wird das Umfangssegment, welches für ein dort montiertes Schlegelmesser benötigt wird, freigehalten, auch damit das Schlegelmesser **11** um volle **360°** um den Befestigungsstab **22** rotieren kann. Der restliche Umfangsbereich von circa **270°** zwischen den beiden benachbarten Halteblechen **23** wird jedoch verschlossen durch ein streifenförmiges Schließblech **24:**

Dieses Schließblech **24** setzt an der Zentralwelle **21** an, erstreckt sich radial nach außen bis fast an den Außenumfang der Haltebleche **23,** erstreckt sich von dort entlang des Umfanges der Haltebleche **23,** der nicht für das Bewegen des Schlegelmessers **11** benötigt wird, und am Ende des zu verschließenden Segmentes wieder vom Außenumfang zurück zur Zentralwelle **21,** wobei das Schließblech **24** an seinen beiden Längskanten fest, insbesondere dicht, mit den beiden benachbarten Halteblechen **23** verbunden, beispielsweise verschweißt, ist.

Auf diese Art und Weise ist der Außenumfang der Messerwelle **20** im Wesentlichen geschlossen, nämlich bis auf die Abschnitte, an denen sich die Schlegelmesser **11** bewegen können müssen, so dass ein Verhaken mit dem teils sehr widerstandsfähigen Bewuchs wie Buschwerk, welches mit dieser Messerwelle **20** gemäht werden soll, weitgehend ausgeschlossen werden kann.

### BEZUGSZEICHENLISTE

- 1: Lagerauge
- **2**: Schneidkante
- **2**b**1, 2**b**2**: Teil-Schneidkante
- **3**: Messerkopf
- **4**: Absatz
- **5**a**,** b: freies Ende
- **6**: Außenkontur
- **7**: Krümmungsradius
- **8**: Flugkreis
- **9**: Unterseite
- **10**: Rotationsachse Messerwelle
- **10'**: axiale Richtung des Lagerauges, Schwenkachse des Schlegelmessers
- **11**: Schlegelmesser
- **12**: Schneidwinkel
- **13**: Schwerpunkt der Kontur
- **14**: realer Schwerpunkt des Schlegelmessers
- **15**: Lagerplatte
- **16**: Länge
- **17**: Länge
- **18**: Kopfwinkel
- **19**: Erstreckungswinkel
- **19'**: Teilwinkel
- **20**: Messerwelle
- **21**: Zentralwelle
- **22**: Befestigungsstab
- **23**: Halteblech
- **24**: Schließblech
- **25**: Distanzbuchse
- **26**: Lagerzapfen
- **27**: Abstand
- **28**: Mantellinie
- **29**: Fortsatz

## Patentansprüche

1. Schlegelmesser **(11)** für eine rotierende Messerwelle **(20)** mit
- einem Lagerauge **(1),**
- einer von dem Lagerauge **(1)** radial entfernten Kante **(2)** an einem Messerkopf **(3),**
wobei in der axialen Richtung **(10')** des Lagerauges **(1)** betrachtet
- der Messerkopf **(3)** einen Erstreckungswinkel **(19)** in Umfangsrichtung von > **50°** aufweist,
- die Verbindungslinie zwischen den am weitesten voneinander entfernten Punkten des Messerkopfes **(3)** an der Kante **(2)** die Tangente an den Flugkreis **(8)** des Schlegelmessers **(11)** unter einem Kopfwinkel **(18)** von höchstens **42°** schneidet.
**dadurch gekennzeichnet, dass**
- die Kante **(2)** als Schneidkante **(2)** ausgebildet ist,
- das Lagerauge **(1)** in axialer Richtung **(10')** betrachtet eine U-Kontur mit einer offenen Seite aufweist, und eine ebene Lagerplatte **(15)** auf den freien Enden (5a, b) der U-Kontur verschraubt ist über die offene Seite des Lagerauges **(1)** hinweg,
- wofür die freien Enden (5a, b) ebene und zueinander fluchtende Flächen besitzen, in die hinein sich Gewindebohrungen erstrecken.

2. Schlegelmesser nach Anspruch **1,**
**dadurch gekennzeichnet, dass**
- der Messerkopf **(20)** in nur eine Umfangsrichtung weisend wenigstens eine Schneidkante **(2)** aufweist und insbesondere
- die Schneidkante **(2)** etwa parallel zur axialen Richtung **(10')** des Lagerauges **(1)** verläuft.

3. Schlegelmesser nach einem der vorhergehenden Ansprüche,
**dadurch gekennzeichnet, dass**
- der Messerkopf **(3)** einen Erstreckungswinkel **(19)** in Umfangsrichtung von > **60°,** besser > **65°** aufweist, und/oder
- der Kopfwinkel höchstens **40°,** besser höchstens **35°** beträgt.

4. Schlegelmesser nach einem der vorhergehenden Ansprüche,
**dadurch gekennzeichnet, dass**
- das gesamte Schlegelmesser **(11)** bis auf die Lagerplatte **(15)** einstückig ausgebildet ist, und/oder
- in radialer Richtung betrachtet der Messerkopf **(3)** in beiden Richtungen über das Lagerauge **(1)** vorsteht
- und/oder der Messerkopf **(3)** im Wesentlichen ohne Schaft direkt in das Lagerauge **(1)** übergeht.

5. Schlegelmesser nach einem der vorhergehenden Ansprüche,
**dadurch gekennzeichnet, dass**
die in axialer Richtung **(10')** dünnste Stelle zwischen Messerkopf **(3)** und Lagerauge **(1)** mindestens um den Faktor **1,1,** besser den Faktor **1,2,** besser den Faktor **1,3** breiter ist als der freie Durchmesser des Lagerauges **(1).**

6. Schlegelmesser nach einem der vorhergehenden Ansprüche,
**dadurch gekennzeichnet, dass**
in Umfangsrichtung die längste Erstreckung des Messerkopfes **(3)** von der Schneidkante **(1)** aus gemessen mindestens das **2,5-fache,** besser das **2,8-**fache der schmalsten Stelle zwischen Messerkopf **(3)** und Lagerauge **(1)** beträgt.

7. Schlegelmesser nach einem der vorhergehenden Ansprüche,
**dadurch gekennzeichnet, dass**
der Messerkopf (3) betrachtet in axialer Richtung **(10')** eine Außenkontur **(6)** aufweist, die konvex gekrümmt ist und deren Krümmungsradius höchstens **155**%**,** besser höchstens **150**%**,** besser höchstens **145**% des Flugkreisradius des Schlegelmessers **(11)** beträgt.

8. Schlegelmesser nach einem der vorhergehenden Ansprüche,
**dadurch gekennzeichnet, dass**
der Schneidwinkel **(12)** zwischen der Unterseite **(9)** und der Außenkontur **(6)** des Messerkopfes **(3)** < **50°,** besser < **45°,** besser < **42°** ist und/oder > **30°,** besser > **35°,** besser > **38°** ist.

9. Schlegelmesser nach einem der vorhergehenden Ansprüche,
**dadurch gekennzeichnet, dass**
der Schwerpunkt **(13)** der Querschnittskontur und/oder der radiale Schwerpunkt **(14)** des Schlegelmessers **(11)** betrachtet in axialer Richtung **(1)** nicht weiter als **70**%**,** besser nicht weiter als **65**%**,** besser nicht weiter als **60**% des Flugkreisradius vom Flugkreis **(8)** radial nach innen versetzt angeordnet ist.

10. Schlegelmesser nach einem der vorhergehenden Ansprüche,
**dadurch gekennzeichnet, dass**
die axiale Länge des Messerkopfes **(3)** größer ist als die axiale Länge des Lagerauges **(1),** insbesondere um mindestens **15**% größer, besser um mindestens **20**% größer.

11. Schlegelmesser nach einem der vorhergehenden Ansprüche,
**dadurch gekennzeichnet, dass**
die Schneidkante **(2)** in ihrem mittleren Bereich ohne Absatz, insbesondere gerade, durchgeht und nahe dem jeweiligen axialen Ende einen Absatz aufweist, so dass die axial außerhalb des Absatzes liegenden TeilSchneidkanten **(2**a**,** b) radial gegenüber dem Hauptteil der Schneidkante **(2)** nach innen versetzt sind, und die Teil-Schneidkanten **(2**a**,** b) in axialer Richtung jeweils maximal **15**%**,** besser jeweils maximal **10**% der Länge des Messerkopfes **(3)** ausmachen.

12. Messerwelle **(20),** wobei
- die Messerwelle **(20)** eine Zentralwelle **(21)** aufweist, von der beidseits je ein Lagerzapfen **(26)** axial vorsteht,
- über den Umfang verteilt radial beabstandet außerhalb der Zentralwelle **(21)** axial liegende Befestigungsstäbe **(22)** vorhanden sind,
- sowie Haltebleche **(23),** die in einer Radialebene zur Rotationsachse **(10)** der Messerwelle **(20)** axial beabstandet angeordnet sind,
- zwischen je zwei benachbarten Halteblechen **(23)** jeweils ein Schlegelmesser **(11)** angeordnet ist, in dem sich der Befestigungsstab **(22)** durch das Lagerauge **(1)** des Schlegelmessers **(11)** hindurcherstreckt und
- die Befestigungsstäbe **(22)** näher am Außenumfang der Haltebleche **(23)** angeordnet sind als der Flugkreisradius des Schlegelmessers **(11)** beträgt,
- der Abstand **(27)** zwischen dem Befestigungsstab **(22)** und dem Außenumfang der Zentralwelle **(21)** groß genug ist, um das Schlegelmesser **(11)** dazwischen hindurchschwenken zu lassen.
**gekennzeichnet durch**
- die Halteblechen **(23)** sowohl von der Zentralwelle **(21)** als auch den Befestigungsstäben **(22)** durchdrungen werden und eine kreisförmige Kontur besitzen,
- das Lagerauge **(1)** in axialer Richtung **(10')** betrachtet eine so dimensionierte U-Kontur mit einer offenen Seite aufweist, und eine ebene Lagerplatte **(15)** auf den freien Enden (5a, b) der U-Kontur verschraubt ist über die offene Seite des Lagerauges **(1)** hinweg, dass
- nach Lösen der Verschraubung die einseitig offene U-Kontur das Lagerauge **(1)** radial zur Seite von seinem als Lagerbolzen dienenden Befestigungsstab **(22)** der Messerwelle **(20)** abgezogen werden kann.

13. Messerwelle **(20)** nach Anspruch **12,**
**dadurch gekennzeichnet, dass**
der Umfangsbereich zwischen zwei benachbarten Halteblechen **(23),** der außerhalb des Flugkreises **(8)** des zwischen diesen beiden Halteblechen **(23)** angeordneten wenigstens einen Schlegelmessers **(11)** liegt, wenigstens auf der Außenseite durch ein Schließblech **(24)** verschlossen ist, insbesondere auch in radialer Richtung zur Zentralwelle **(21)** hin.

14. Messerwelle nach Anspruch **13,**
**dadurch gekennzeichnet, dass**
zwischen jedem Axialende des Lagerauges **(1)** und dem angrenzenden Halteblech **(23)** eine Distanzbuchse **(25)** angeordnet ist, so dass der freie Abstand zwischen den Halteblechen **(23)** größer ist als die axiale Erstreckung des gesamten Schlegelmessers **(11),** insbesondere des Messerkopfes **(3)** des Schlegelmessers **(11).**

## Claims

1. A flail blade (11) for a rotating blade shaft (20), the flail blade comprising:
- a bearing eye (1),
- an edge (2) provided at a blade head (3) and radially offset from the bearing eye (1),
wherein viewed in an axial direction (10') of the bearing eye (1),
- the blade head (3), has an extension angle (19) > 50° in a circumferential direction,
- a connection line between two points of the blade head (3) that are spaced at a maximum distance from each other at the edge (2) intersects a tangent at the throwing circle (8) of the flail blade (11) with a head angle (18) of 42° at the most,
**characterized in that**
- the edge (2) is configured as a cutting edge (2),
- the bearing eye (1) includes a U-contour with an open side in the axial direction (10') and a flat bearing plate (15) is bolted at the free ends of (5a, b) of the U-shaped contour along an open side of the bearing eye (1),
- wherein free ends (5a, b) have flat surfaces that are aligned with each other wherein threaded bore holes extend into the flat surfaces.

2. The flail blade according to claim 1,
**characterized in that**
- the blade head (20) includes at least one cutting edge (2) oriented in only one circumferential direction, and in particular
- the cutting edge (2) extends approximately parallel to the axial direction (10') of the bearing eye (1).

3. The flail blade (11) according to one of the preceding claims,
**characterized in that**
- the blade head (3) has an extension angle (19) in the circumferential direction of > 60°, better > 65°, and/or
- the head angle is 40° at the most, better 35° at the most.

4. The flail blade according to one of the preceding claims,
**characterized in that**
- the entire flail blade (11) is integrally configured in one piece besides the bearing plate (15), and/or
- in the radial direction the blade head (3) protrudes in both directions beyond the bearing eye (1),
- and/or the blade head (3) transitions essentially without a shaft directly into the bearing eye (1).

5. The flail blade according to one of the preceding claims,
**characterized in that**
the thinnest spot in the axial direction (10') between the blade head (3) and the bearing eye (1) is wider than a free diameter of the bearing eye (1) at least by a factor of 1.1, better by a factor of 1.2 better by a factor 1.3.

6. The flail blade according to one of the preceding claims,
**characterized in that**
in the circumferential direction a longest extension of the blade head (3) measure from the cutting edge (1) is at least 2.5 times, better 2.8 times of a narrowest spot between the blade head (3) and the bearing eye (1).

7. The flail blade according to one of the preceding claims,
**characterized in that**
the blade head (3) viewed in the axial direction (10') has an outer contour (6) that is convex cambered and whose curvature radius is at the most 155%, better at the most 150%, better at the most 145% of the throwing circle of the flail blade (11).

8. The flail blade according to one of the preceding claims,
**characterized in that** the cutting angle (12) between the bottom side (9) and the outer contour (6) of the blade head (3) is < 50°, better < 45°, better < 42°, and/or > 30°, better > 35°, better > 38°.

9. The flail blade according to one of the preceding claims,
**characterized in that**
a center of gravity (13) of the cross sectional contour and/or a radial center of gravity (14) of the flail blade (11) viewed in the axial direction (10) is not offset radially inward by more than 70%, better by not more than 65%, better by not more than 60% of a throwing circle radius of the throwing circle (8).

10. The flail blade (11) according to one of the preceding claims,
**characterized in that**
an axial length of the blade head (3) is greater than an axial length of the bearing eye (1), in particular by at least 15% greater, better by at least 20% greater.

11. The flail blade according to one of the preceding claims,
**characterized in that**
the cutting edge (2) extends in its center portion without a shoulder, in particular in a straight line and includes a shoulder proximal to a respective axial end so that partial cutting edges (2a, b) arranged axially outside of the shoulder are radially offset inward relative to the main element of the cutting edge (2) and the partial cutting edges (2a, b) amount in the axial direction respectively to 15% at the most, better respectively to 10% at the most of a length of the blade head (3).

12. A blade shaft (20), wherein
- the blade shaft (20) includes a central shaft (21) from which a respective bearing pinion (26) protrudes in an axial direction on both sides,
- axially arranged attachment rods (22) are provided distributed over the circumference and radially offset outside of the central shaft (21), and
- support plates (23) that are arranged axially offset in a radial plane of the rotation axis of blade shaft (20),
- a respective flail blade (11) is arranged between two adjacent support plates (23) in that the attachment rods (22) extends through the bearing eye (1) of the flail blade 11),
- the attachment rods (22) are arranged closer to the outer circumference of the support plates (23) than the throwing circle radius of the flail blade (11),
- a distance (27) between the attachment rod (22) and the outer circumference of the central shaft (21) is large enough to pivot the flail blade (11) through there between
**characterized in that**
- the support plates (23) are penetrated by the central shaft (21) as well as by the attachment rods (22) and have a circular contour,
- the bearing eye (1) has a U shaped contour with an open side in the axial direction (10') that is sized accordingly and a flat support plate (15) is bolted to the free ends (5a, b) of the U shaped contour beyond the open side of the bearing eye (1) so that
- after disengaging the bolted connection the one sided open U-shaped contour of the bearing eye (1) can be pulled off from its attachment rod (22) of the blade shaft (20), wherein the attachment rod functions as a bearing bolt.

13. The blade shaft (20) according to claim 12,
**characterized in that**
a circumferential portion between two adjacent support plates (23) which is arranged outside of the throwing circle (8) of the at least one flail blade (11) arranged between the two support plates (23) is closed at least on an outside by a closure plate (24), in particular in a radial direction towards the central shaft (21).

14. The blade shaft according to claim 13,
**characterized in that**
a spacer bushing (25) is arranged between each axial end of the bearing eye (1) and the adjacent support plate (23), so that a free distance between the support plates (23) is greater than an axial extension of the entire flail blade (11), in particular of the blade head (3) of the flail blade (11).

## Revendications

1. Couteau de fléau (11) pour un arbre de de couteau rotatif (20) avec
- un oeillet de palier (1),
- une arête de coupe (2) éloignée radialement de l'oeillet de palier (1) sur une tête de couteau (3),
observé dans la direction radiale (10') de l'oeillet de palier (1),
- la tête de coupe (3) présentant un angle d'extension (19) dans la direction périphérique supérieur à 50°,
- la ligne de connexion entre des points les plus éloignés de la tête de coupe (3) croisant au niveau de l'arête (2) la tangente sur le cercle de rotation (8) du couteau de fléau (11) en formant un angle de tête (18) de maximum 42°,
**caractérisé en ce que**
- l'arête (2) est réalisée comme une arête de coupe (2),
- l'oeillet de palier (1), observé dans la direction axiale (10'), présente un contour en U avec une face ouverte, et une plaque de palier plane (15) est vissée aux extrémités libres (5a, b) du contour en U au-delà de la face ouverte de l'oeillet de palier (1),
- les extrémités libres (5a, b) possèdent des surfaces planes et jointives dans lesquelles s'étendent des perçages filetés.

2. Couteau de fléau selon la revendication 1,
**caractérisé en ce que**
- la tête de coupe (20) présente une arête de coupe (2) dirigée au moins dans une direction périphérique et en particulier
- l'arête de coupe (2) s'étend approximativement parallèlement à la direction axiale (10') de l'oeillet de palier (1).

3. Couteau de fléau selon l'une des revendications précédentes,
**caractérisé en ce que**
- la tête de coupe (3) présente un angle d'extension (19) dans la direction périphérique supérieur à 60°, mieux supérieur à 65° et/ou
- l'angle de tête étant maximal de 40° au mieux maximal de 35°.

4. Couteau de fléau selon l'une des revendications précédentes,
**caractérisé en ce que**
- l'ensemble du couteau de fléau (11) est réalisé d'un seul tenant à l'exception de la plaque de palier (15), et/ou
- observée dans la direction radiale, la tête de coupe (3) fait saillie dans les deux directions au-dessus de l'oeillet de palier (1),
- et/ou la tête de coupe (3) se prolonge sensiblement sans tige directement par l'oeillet de palier (1).

5. Couteau de fléau selon l'une des revendications précédentes,
**caractérisé en ce que**
l'endroit le plus étroit dans la direction axiale (10') entre la tête de coupe (3) et l'oeillet de palier (1) est plus large d'au moins le facteur 1,1, au mieux le facteur 1,2, au mieux le facteur 1,3 que le diamètre libre de l'oeillet de palier (1).

6. Couteau de fléau selon l'une des revendications précédentes,
**caractérisé en ce que**
l'extension la plus longue de la tête de coupe (3), mesurée dans la direction périphérique, depuis l'arête de coupe (1), représente au moins 2,5 fois, au mieux 2,8 fois de l'endroit le plus étroit entre la tête de coupe (3) et l'oeillet de palier (1).

7. Couteau de fléau selon l'une des revendications précédentes,
**caractérisé en ce que**
la tête de coupe (3), observée dans la direction axiale (10',) présente un contour externe (6) qui est convexe et dont le rayon de courbure représente au plus 155 %, mieux au plus 150 %, au mieux 145 % du rayon de du cercle de rotation du couteau de fléau (11).

8. Couteau de fléau selon l'une des revendications précédentes,
**caractérisé en ce que**
l'angle de coupe (12) entre la face inférieure (9) et le contour externe (6) de la tête de coupe (3) est inférieur à 50°, au mieux à 45°, au mieux à 42° et/ou supérieur à 30°, au mieux supérieur à 35°, au mieux supérieur à 38°.

9. Couteau de fléau selon l'une des revendications précédentes,
**caractérisé en ce que**
le centre de gravité (13) de la section transversale et/ou le centre de gravité radial (14) du couteau de fléau (11), observé dans la direction axiale (1), ne doit pas se trouver radialement décalé vers l'intérieur de plus de 70 %, au mieux de plus de 65 %, au mieux de plus de 60 % du rayon de cercle circulaire (8).

10. Couteau de fléau selon l'une des revendications précédentes,
**caractérisé en ce que**
la longueur axiale de la tête de coupe (3) est supérieure à la longueur axiale de l'oeillet de palier (1), en particulier d'au moins 15 %, au moins d'au moins 20 %.

11. Couteau de fléau selon l'une des revendications précédentes,
**caractérisé en ce que**
l'arête de coupe (2) est dans sa zone médiane sans talon, en particulier est droite, est continue et présente à proximité de l'extrémité axiale respective un talon de sorte que les arêtes de coupe partielles (2a, b) se trouvant axialement à l'extérieur du talon sont radialement décalées vers l'intérieur par rapport à la partie principale de l'arête de coupe (2) et les arêtes de coupe partielles (2a, b) représentent dans la direction axiale respectivement maximum 15 %, au mieux respectivement maximum 10 % de la longueur de la tête de coupe (3).

12. Arbre de coupe (20),
- l'arbre de coupe (20) présentant un arbre central (21) dont fait saillie axialement un tourillon de palier (26),
- des barres de fixation (22) axiales étant disposées réparties sur la périphérie et espacées radialement à l'extérieur de l'arbre central (21),
- ainsi que des tôles de support (23) respectives voisines qui sont disposées à distance dans un plan radial par rapport à l'axe de rotation (10) de l'arbre de couteau (20),
- un couteau de fléau (11) étant disposé entre deux tôles de support voisines (23) dans lequel la barre de fixation (22) s'engage et traverse l'oeillet de palier (1) du couteau de fléau (11), et
- les barres de fixation (22) étant disposées plus proches à la périphérie externe des tôles de support (23) que l'ampleur du rayon du cercle circulaire du couteau de fléau (11),
- la distance (27) entre la barre de fixation (22) et la périphérie externe de l'arbre central (21) étant suffisante pour laisser pivoter le couteau de fléau (11) dans cet espace,
**caractérisé en ce que**
- les tôles de support (23) sont traversées par l'arbre central (21) et les barres de fixation (22) et présentent un contour circulaire,
- l'oeillet de palier (1), observé dans une direction axiale (10'), présente un contour en U dimensionné en conséquence avec une face ouverte et une plaque de palier plane (15) est vissée aux extrémités libres (5a, b) du contour en U, au-delà de la face ouverte de l'oeillet de palier (1),
- après avoir desserré le vissage sur le contour en forme de U ouvert sur un côté, l'oeillet de palier (1) peut être extrait radialement par rapport à la barre de fixation (22) de l'arbre de couteau (20), la barre servant de boulon de palier.

13. Arbre de coupe (20) selon la revendication 12,
**caractérisé en ce que**
la zone périphérique entre deux tôles voisines de support (23), qui se trouve à l'extérieur du cercle circulaire (8) d'au moins un couteau de fléau (11) disposé entre ces deux tôles voisines de support (23), est fermée au moins sur la face externe par une tôle de fermeture (24), en particulier également dans la direction radiale vers l'arbre central (21).

14. Arbre de coupe, selon la revendication 13,
**caractérisé en ce qu'**entre chaque extrémité axiale de l'oeil de palier (1) et la tôle de support (23) adjacente, est disposée une douille d'écartement (25), de sorte que la distance libre entre les tôles de support (23) est supérieure à l'extension axiale de l'ensemble du couteau de fléau (11) en particulier de la tête de coupe (3) du couteau de fléau (11).
